# EUROPÄISCHE PATENTSCHRIFT

(11) **EP 0 831 046 B1**
(45) Veröffentlichungstag und Bekanntmachung des Hinweises auf die Patenterteilung: **26.06.2002**
(21) Anmeldenummer: 97113101.6
(22) Anmeldetag: 30.07.1997
(51) Int. Cl.: B65H 19/10

(54) **Doppelseitiges Klebeband zum Spleissen einer Papierbahn und Verfahren zu seiner Verwendung**
Double sided adhesive tape to splice a paperweb and method for its use
Bande adhésive double face pour rattacher une bande de papier et procédé pour son utilisation

(30) Priorität: 14.08.1996 DE 19632689
(43) Veröffentlichungstag der Anmeldung: 25.03.1998
(73) Patentinhaber: Tesa AG, 20253 Hamburg (DE)
(72) Erfinder: Wienberg, Uwe, 25436 Uetersen (DE); Nootbaar, Jens, 22527 Hamburg (DE)

(56) Entgegenhaltungen:
- EP-A- 0 418 527
- WO-A-91/08159
- WO-A-95/29115
- DE-A- 4 210 329
- GB-A- 2 294 235

## Beschreibung

Die Erfindung betrifft ein Klebeband für den fliegenden Rollenwechsel in Papierveredelungsmaschinen oder dergleichen, sowie ein Verfahren zu seiner Verwendung in solchen Maschinen.

Der fliegende Rollenwechsel ist in Papierfabriken oder dergleichen ein gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 5 Minuten Zeit bleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischen klebende Fix das Resultat sind: ein in der Papierindustrie unerwünschtes Resultat.

Für diese "Spitzenverklebung" beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

So beschreibt **EP 418,527 A2** ein Verfahren zum Vorbereiten einer Rolle bahnförmigen Bedruckstoffs für automatische Rollenwechseler und einen dafür geeigneten, in drei Zonen unterteilten Klebestreifen. Davon ist die mittlere Zone nichtklebend, was in mehrfacher Hinsicht in der Praxis nachteilig ist, so beim eigentlichen fliegenden Spleiß selbst, bei dem eine ruckartige Belastung die Folge ist, aber auch beim Wickeln zu einer Rolle aus einem derartigen Klebestreifen und schließlich auch beim mechanisierten Anbrigen.

Aus **DE 42 10 329 A1** ist eine Anordnung zum Verbinden aufeinanderfolgender, zu Rollen gewickelter Papierbahnen bekannt, mit entsprechenden Klebestreifen. Auch diese sind segmentartig in Zonen aufgebaut, vgl. etwa die Figuren 3 - 6. WO 91/08159 beschreibt ein Klebeband mit galtbarem Träger, das jedoch nur zur Sicherung den obersten Lage einer Papierrolle dient.

Aufgabe der Erfindung war es, hier Abhilfe zu schaffen, insbesondere eine dünne Verklebung beim fliegenden Rollenwechsel zu ermöglichen, zugleich aber auch, diese Rollenwechsel ruckfrei und mit mehr Zeit, auch mehr Verarbeitungszeit zu ermöglichen, ohne aber die bisher erzielten Vorzüge aufzugeben.

Gelöst wird diese Aufgabe, wie dies in den Ansprüchen näher dargelegt ist.

Insbesondere betrifft die Erfindung ein Klebeband für den fliegenden Rollenwechsel mit gestoßenem Spleiß in Papierveredelungsmaschinen, Druckmaschinen oder dergleichen, mit einem Papierträger und einer wasserlöslichen Selbstklebemasse, dadurch gekennzeichnet, daß der Papierträger (2) beidseitig mit einer wasserlöslichen Selbstklebemasse (3) beschichtet ist, und daß der Papierträger (2) aus einem spleißfreudigen Papier besteht.

Das Klebeband weist auf einer der Selbstklebemassen (3) eine Abdeckung (4) auf.

Diese Abdeckung (4) ist mit einem Schlitz (5) versehen.

Ferner bevorzugt ist ein Klebeband das 120 bis 150 mm breit ist, und in seiner gesamten Dicke 100 bis 250, insbesondere 100 bis 150 µm mißt.

Bevorzugt ist auch ein Klebeband, wobei der Schlitz (5) im Abstand von 20 - 40 mm von dem Rand des Klebebandes (1) vorgesehen ist.

Bevorzugt ist ferner besonders ein Klebeband mit zweiteiligem Papierträger, wie in den Unteransprüchen beschrieben.

Und auch ein Verfahren unter Verwendung derartiger Klebebänder ist Gegenstand der Erfindung, nämlich ein Verfahren eines fliegenden Rollenwechsels mit gestoßenem Spleiß in einer Papierveredelungsmaschine, Druckmaschie oder dergleichen, wobei ein Klebeband mit einem Papierträger und einer wasserlöslichen Selbstklebemasse verwendet wird, dadurch gekennzeichnet, daß man ein erfindungsgemäßes Klebeband einsetzt und der obersten Papierbahn einer neuen Papierrolle teilweise hinterklebt, und mit seiner Rückseite mit der darunter liegenden Papierbahn verklebt und damit die oberste Papierbahn sichert, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt und so abgeschnitten bzw. abgeschlagen wird, so daß die offenliegende Selbstklebemasse des Klebebandes mit der Papierbahn der alten Rolle bei im wesentlichen gleichen Geschwindigkeiten der Papierbahnen in gestoßenen Spleiß verklebt, während zugleich der spleißfreudige Papierträger derart spleißt, daß beide Selbstklebemassen, die auf ihm beschichtet waren, von seinen Resten nichtklebend abgedeckt sind.

Bevorzugt ist dabei dieses Verfahren derart, daß von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, währen der größere Teil der Abdeckung erst kurz vor dem Einsatz zum fliegenden Rollenwechsel abgezogen wird.

Erfindungsgemäß wird der Papierindustrie ermöglicht, von dem bisherigen Verfahren der "Spitzenverklebung" abzugehen, ohne aber deren Vorteile aufzugeben.

Denn aus technischen Gründen und auch aus Rationalisierungsgründen ist es erwünscht, beim automatischen Rollenwechsel an Beschichtungsanlagen von der bekannten "Spitzenverklebung" mit beidseitig wiederaufbereitbarem Klebeband (Fix) abzugehen. Nun kann auf ein einseitig klebendes wiederaufbereitbares Klebeband umgestellt werden, mit beachtlichen Vorteilen.

Bei dieser neuen Verklebungstechnik mit einem erfindungsgemäßen Klebeband geht man vorteilhaft so vor, daß die oberste Papierlage (Rohpapier) mit einem etwa 120 mm breiten einseitig klebenden abgedeckten wiederaufbereitbarem Klebeband unterklebt wird (diagonal zur Laufrichtung). Die Unterklebung sollte ca. 30 mm betragen. Vor dem Unterkleben wird das 30 mm perforierte oder geschlitzte Abdeckpapier abgezogen. Für den eigentlichen Splice-Vorgang bleiben nach Abzug des Trennpapieres dann noch etwa 90 mm.

Das einseitig klebende Klebeband mit der offenen Klebebandseite nach außen steht jetzt dem eigentlichen Splice zur Verfügung, wenn die ggf. vorhandene Abdeckung entfernt ist.

Beim Beschleunigen der Papierrolle ist es erforderlich, daß der Anfang des Papiers (Klebestelle) mit Hilfe eines beidseitig klebenden Klebebandes (wiederaufbereitbar) festgehalten wird, wie dies erfindungsgemäß erreicht wird.

Die erfindungsgemäß erzielten Vorteile liegen insbesondere darin, daß die Klebestelle wesentlich dünner als bisher ist (dadurch weniger Papierabrisse), daß ein ruckfreier Spleiß ermöglicht wird, und daß weniger Stillstandzeiten der Maschinen auftreten (Erhöhung des Wirkungsgrades), denn ein Abriß kostet bis zu 30.000,- DM. Die Dicke der Klebestelle ist vorteilhaft gering: zur Zeit: 2 Papierlagen und tesafix Klebeband (Dicke des Klebebandes 0,085 mm), erfindungsgemäß aber z.B. nur 1 Papierlage und tesakrepp (Dicke des Klebebandes 0,088 mm). Schließlich kann die Klebestelle außerhalb der Beschichtungsanlage vorbereitet werden (Umroller). Damit ergibt sich eine Personaleinsparung an der Streichanlage sowie mehr Zeit für die Ausführung der Klebestelle am Umroller.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes,
- Fig. 2: eine seitliche, schematische Ansicht eines Klebebandes gemäß Fig. 1, aufgeklebt auf eine Papierrolle und bis auf das Trennpapier fertig für einen fliegenden Rollenwechsel,
- Fig. 3: eine Ansicht gemäß Fig. 2, aber nach erfolgtem fliegenden Rollenwechsel, und
- Fig. 4: eine seitliche, schematische Ansicht einer weiteren bevorzugten Ausführungsform eines erfindungsgemäßen Klebebandes.

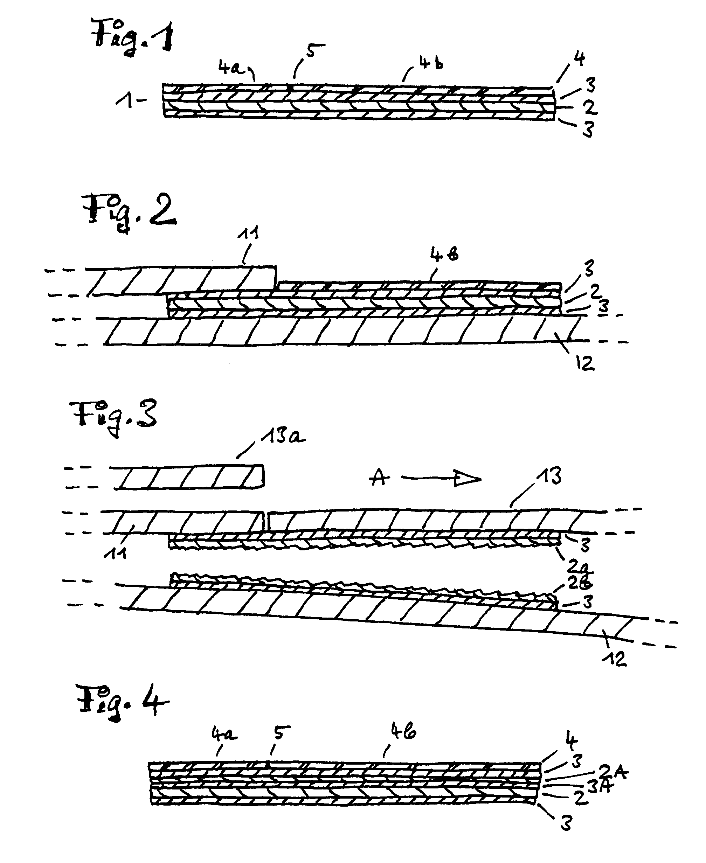

Im einzelnen zeigt Fig. 1 ein Klebeband 1 mit einem Träger (2) aus gekrepptem Papier, beidseitig beschichtet mit einer wasserlöslichen Selbstklebemasse (3). Die Gesamtdicke des Trägers (2) mit beiden Selbstklebemassen (3) beträgt 0,140 mm, die Breite 150 mm. Abgedeckt ist die Selbstklebemasse (3) mit einem silikonisierten Trennpapier (4), das in 30 mm Abstand vom linken Rand mit einem Schlitz (5) versehen ist, so daß zunächst der linke Teil des Trennpapiers (4a) abgenommen werden kann, dann der rechte Teil (4b). Als Selbstklebemassen (3) werden jeweils Schichten von 50 µm wasserlöslicher Acrylatklebemasse eingesetzt, wie sie als tesa 51915 im Handel sind. Als spaltbarer Papierträger wird ein 60 g/m² Papier eingesetzt, das mittig spaltet.

In Fig. 2 ist dargestellt, wie ein solches Klebeband (1) hinter eine Papierbahn (11) geklebt ist, und zwar mit dem linken Teil, nachdem von diesem der Teil des Trennpapiers (4a) abgezogen wurde, während die freiliegende Selbstklebemasse (3) mit der unter der Papierbahn (11) liegenden Papierbahn (12) einer Papierrolle verklebt. Auch der rechte Teil (4b) des Trennpapiers (4) wird dann abgezogen, so daß die so ausgerüstete Papierrolle fertig für einen fliegenden Rollenwechsel ist, wobei die Verklebung des Klebebandes (1) schräg über die Rolle verläuft, um einen Ruck im Moment des fliegenden Rollenwechsels abzuschwächen.

Die obere Selbstklebemasse (3) liegt nun offen und bereit für diesen fliegenden Wechsel im gestoßenen Spleiß, in einer Breite von 120 mm und über die gesamte Breite der Papierrolle.

Die so ausgerüstete (neue) Papierrolle wird neben die abgewickelte (alte) Papierrolle gebracht, an die die neue angesetzt werden soll, und auf die gleiche Drehgeschwindigkeit (Pfeil A) beschleunigt wie diese. Ist dies erreicht, kann der Wechsel vollzogen werden: Die neue Rolle wird an die alte herangeführt, die Selbstklebemasse (3) verklebt gemäß Fig. 3 mit der Papierbahn (13) der alten Rolle, während die alte Rolle abgeschlagen wird (13a) und der spleißfreudige Papierträger (2) derart spleißt, daß ein Teil (2a) auf der Papierbahn (11/13) verbleibt und dort die Selbstklebemasse (3) abdeckt, während der andere Teil (2b) auf der Papierbahn (12) verbleibt und auch dort die Selbstklebemasse 3 abdeckt. Damit sind beide Selbstklebemassen (3) gewissermaßen neutralisiert, kleben nicht mehr, und stören damit auch nicht im weiteren Prozeß in den Papiermaschinen.

In Figur 4 ist eine weitere Ausführungsform dargestellt, die dann besonders geeignet ist, wenn höhere Zugkräfte von dem Klebeband ausgehalten werden sollen. Wiederum ist ein spaltbarer Papierträger (2) vorgesehen, wie zuvor beschrieben, spaltbar in der Mitte und mit etwa 60 g/m², beidseits beschichtet mit Klebmasse (3) bzw. (3A), an der nach unten offen liegenden Seite (3) mit 50 µm Dicke, nach oben hin (3A) zu einem weiteren Papierträger (2A) mit 20 µm Dicke, Masse wie oben beschrieben. Auf die Klebmasse (3A) ist ein weiterer zugfester Papierträger (2A) kaschiert, ein Seidenpapier bzw. ein Vlies von 35 bzw. 50 µm Dicke, und auf diesem befindet sich wiederum eine 50 µm Schicht einer Klebmasse (3), wie oben beschrieben, abgedeckt mit Trennpapier (4a) und (4b).

Diese Varianten mit Seidenpapier-Träger sind insbesondere geeignet für Zugkräfte bis 800 N/cm, mit Vlies-Träger bis 1300 N/cm.

## Patentansprüche

1. Klebeband für den fliegenden Rollenwechsel mit gestoßenem Spleiß in Papierveredelungsmaschinen, Druckmaschinen oder dergleichen, mit einem Papierträger und einer wasserlöslichen Selbstklebemasse, **dadurch gekennzeichnet, daß** der Papierträger (2) beidseitig mit einer wasserlöslichen Selbstklebemasse (3) beschichtet ist,
wobei die obere Selbstklebemasse (3) beim fliegenden Rollenwechsel mit der alten Rolle verklebt, und daß der Papierträger (2) aus einem spleißfreudigen Papier besteht, der beim fliegenden Rollenwechsel derart spleißt, daß ein Teil (2a) auf der Papierbahn (11, 13) verbleibt und dorz die Selbstklebemasse (3) abdeckt, während der audere Teil (26) auf der Papierbahn (12) verbleibt und dorz die Selbstklebemasse (3) abdeckt, und wobei eine der Selbstklebemassen (3) eine Abdeckung (4) aufweist, die mit einem Schlitz (5) versehen ist.

2. Klebeband nach Anspruch 1, **dadurch gekennzeichnet, daß** das Klebeband (1) 120 bis 150 mm breit ist und daß der Papierträger (2) aus einem Papier mit einem Gewicht von 50 - 70 g/m², insbesondere 60 g/m² besteht.

3. Klebeband nach Anspruch 1, **dadurch gekennzeichnet, daß** der Papierträger (2) zweiteilig ausgebildet ist, zum einen aus einem zugfesten Papierträger (2A) und zum anderen aus einem Papierträger, der dem Papierträger (2) gemäß Anspruch 1 entspricht, wobei diese beiden Papierträger miteinander verbunden sind, durch mechanische Maßnahmen oder einen wasserlöslichen Kleber (3A).

4. Verfahren eines fliegenden Rollenwechsels mit gestoßenem Spleiß in einer Papierveredelungsmaschine, Druckschmaschine oder dergleichen, wobei ein Klebeband mit einem Papierträger und einer wasserlöslichen Selbstklebemasse verwendet wird, **dadurch gekennzeichnet, daß** man ein Klebeband nach einem der Ansprüche 1 - 3 einsetzt und der obersten Papierbahn einer neuen Papierrolle teilweise hinterklebt und mit seiner Rückseite mit der darunter liegenden Papierbahn verklebt und damit die oberste Papierbahn sichert, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt und so abgeschnitten/abgeschlagen wird, so daß die offenliegende Selbstklebemasse des Klebebandes mit der Papierbahn der alten Rolle bei im wesentlichen gleichen Geschwindigkeiten der Papierbahn im gestoßenen Spleiß verklebt, während zugleich der spleißfreudige Papierträger derart spleißt, daß beide Selbstklebemassen, die auf ihm beschichtet waren, von seinen Resten nichtklebend abgedeckt sind.

5. Verfahren nach Anspruch 4, **dadurch gekennzeichnet, daß** von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, während der größere Teil der Abdeckung erst kurz vor dem Einsatz zum fliegenden Rollenwechsel abgezogen wird.

## Claims

1. Adhesive tape for flying reel change with butted splice, in paper finishing machines, printing machines or the like, having a paper backing and a water-soluble self-adhesive composition, **characterized in that** the paper backing (2) is coated on both sides with a water-soluble self-adhesive composition (3), the upper self-adhesive composition (3) bonding to the old reel in flying reel change, and **in that** the paper backing (2) consists of a readily splicing paper which splices in flying reel change in such a way that one part (2a) remains on the paper web (11,13), where it covers the self-adhesive composition (3), while the other part (26) remains on the paper web (12), where it covers the self-adhesive composition (3), one of the self-adhesive compositions (3) having a cover (4) which is provided with a slit (5).

2. Adhesive tape according to Claim 1, **characterized in that** the adhesive tape (1) is from 120 to 150 mm in width and **in that** the paper backing (2) consists of a paper with a weight of 50-70 g/m², in particular 60 g/m².

3. Adhesive tape according to Claim 1, **characterized in that** the paper backing (2) is of two-part design, comprising firstly a paper backing (2A) of high tensile strength and secondly a paper backing which corresponds to the paper backing (2) according to Claim 1, these two paper backings being connected to one another by mechanical means or by a water-soluble adhesive (3A).

4. Method of flying reel change with butted splice, in a paper finishing machine, printing machine or the like, where an adhesive tape having a paper backing and a water-soluble self-adhesive composition is used, **characterized in that** an adhesive tape according to one of Claims 1 - 3 is employed and bonds the back of part of the topmost web of a new reel of paper, while with its reverse side it bonds the underneath web of paper and thus secures the topmost web of paper, whereupon the new reel of paper is placed adjacent to an almost fully unwound reel of paper that is to be replaced and is accelerated to the same speed as the old reel, and then is pressed against it and so cut off or chopped off so that the exposed self-adhesive composition of the adhesive tape bonds in butted splice with the paper web of the old reel when the webs of paper are at essentially the same speeds, while at the same time the readily splicing paper backing splices in such a way that the two self-adhesive compositions with which it was coated are covered non-adhesively by the remains of said spliced paper backing.

5. Method according to Claim 4, **characterized in that** first of all only the smaller part of the slitted cover is peeled off and the adhesive tape is bonded to the exposed part of the self-adhesive composition behind the topmost web of a new reel of paper, while the larger part of the cover is not peeled off until shortly before its use for flying reel change.

## Revendications

1. Ruban adhésif pour le changement de bobine au vol avec un raccordement bord à bord dans des machines de finissage du papier, des machines d'imprimerie ou analogues, avec un support en papier et une masse auto-adhésive soluble dans l'eau, **caractérisé en ce que** le support en papier (2) est revêtu sur les deux faces d'une masse auto-adhésive soluble dans l'eau (3), dans lequel la masse auto-adhésive supérieure (3) colle à la vieille bobine lors du changement de bobine au vol, et **en ce que** le support en papier (2) se compose d'un papier facile à raccorder qui, lors du changement de bobine au vol, se raccorde d'une manière telle qu'une partie (2a) reste sur la bande de papier (11, 13) et y recouvre la masse auto-adhésive (3), tandis que l'autre partie (2b) reste sur la bande de papier (12) et y recouvre la masse auto-adhésive (3), et dans lequel une des masses auto-adhésives (3) présente un recouvrement (4), qui est pourvu d'une fente (5).

2. Ruban adhésif suivant la revendication 1, **caractérisé en ce que** le ruban adhésif (1) a une largeur de 120 à 150 mm et **en ce que** le support en papier (2) se compose d'un papier ayant un grammage de 50 - 70 g/m², en particulier de 60 g/m².

3. Ruban adhésif suivant la revendication 1, **caractérisé en ce que** le support en papier (2) est réalisé en deux parties, d'une part en un support en papier résistant à la traction (2A) et d'autre part en un support en papier, qui correspond au support en papier (2) suivant la revendication 1, dans lequel ces deux supports en papier sont assemblés l'un à l'autre, par des moyens mécaniques ou par une colle soluble dans l'eau (3A).

4. Procédé de changement de bobine au vol avec un raccordement bord à bord dans une machine de finissage du papier, une machine d'imprimerie ou analogue, dans lequel on utilise un ruban adhésif avec un support en papier et une masse auto-adhésive soluble dans l'eau, **caractérisé en ce que** l'on emploie un ruban adhésif suivant l'une quelconque des revendications 1-3 et on le colle partiellement à l'arrière de la bande de papier supérieure extrême d'une nouvelle bobine de papier, et on le colle par sa face arrière à la bande de papier située sous celle-ci et on fixe ainsi la bande de papier supérieure extrême, puis la nouvelle bobine de papier est placée à côté d'une vieille bobine de papier presqu'entièrement déroulée, à remplacer, et est accélérée à la même vitesse que celle-ci, puis elle est pressée contre celle-ci et coupée/détachée de telle manière que la masse auto-adhésive découverte du ruban adhésif colle en un raccordement bord à bord à la bande de papier de la vieille bobine pour des vitesses sensiblement égales des bandes de papier, tandis que le support en papier facile à raccorder se raccorde en même temps d'une manière telle que les deux masses auto-adhésives, qui étaient revêtues sur celui-ci, soient recouvertes sans collage par ses résidus.

5. Procédé suivant la revendication 4, **caractérisé en ce que** seule la plus petite partie du recouvrement fendu est d'abord détachée et que le ruban adhésif est collé derrière la bande de papier supérieure extrême d'une nouvelle bobine de papier avec la partie libre de la masse auto-adhésive, tandis que la plus grande partie du recouvrement n'est détachée que peu de temps avant l'emploi pour le changement de bobine au vol.
